# EUROPÄISCHE PATENTANMELDUNG

(11) **EP 1 182 725 A2**
(43) Veröffentlichungstag der Anmeldung: **27.02.2002**
(21) Anmeldenummer: 01115340.0
(22) Anmeldetag: 26.06.2001
(51) Int. Cl.: H01Q 1/04, H01Q 1/30

(54) **Unterwasserantenne**

(30) Priorität: 25.08.2000 DE 10041928
(71) Anmelder: STN ATLAS Elektronik GmbH, 28305 Bremen (DE)
(72) Erfinder: Junge, Wilfried, 28309 Bremen (DE)
(74) Vertreter: Thul, Hermann, Dipl.-Phys.

(57) **Zusammenfassung**

Bei einer Unterwasserantenne, insbesondere Schleppantenne, mit mindestens einer akustischen Sektion (101) aus einer Vielzahl von hintereinander beabstandet aufgereihten Hydrophonen (15), die in einem elastischen Schlauch (16) aufgenommen und in einer den Schlauch (16) ausfüllenden Füllmasse (18) gelartiger Konsistenz eingebettet sind, weist zwecks Schaffung einer reparaturfähigen und reparaturfreundlichen Unterwasserantenne mit der Möglichkeit der Änderung ihrer Auftriebscharakteristik die Füllmasse (18) einen niedrigen, oberhalb der Betriebstemperatur der Unterwasserantenne liegenden Schmelzpunkt und eine bei ihrer Herstellung einstellbare spezifische Dichte auf (Fig. 2).

## Beschreibung

Die Erfindung betrifft eine Unterwasserantenne, insbesondere Schleppantenne, der im Oberbegriff des Anspruchs 1 definierten Gattung.

Solche Unterwasserantennen werden als sog. Schleppantennen oder Streamer sowohl im Zivilbereich bei der seismischen Meeresbodenuntersuchung und Exploration als auch im militärischen Sektor zur Aufklärung und frühzeitigen Feinderkennung eingesetzt. Dabei wird die Unterwasserantenne von einem Wasserfahrzeug aus ausgebracht und vom Wasserfahrzeug nachgeschleppt. Durch geeignete Signalverarbeitung der von den Hydrophonen empfangenen Schallwellen können u.a. Schallquellen detektiert und geortet, d.h. bezüglich ihrer Position bestimmt, werden.

Bei einer bekannten Unterwasserantenne dieser Art (DE 195 18 461 C1) ist der Schlauch aus Polyethylen mit einer spezifischen Dichte von kleiner als 1g/cm³ gefertigt. Als Gel wird ein dünnflüssiger, bei Raumtemperatur vulkanisierender 2-Komponenten Silikonkautschuk verwendet. Die beiden Komponenten sind dünnflüssig mit hoher Fließfähigkeit und vulkanisieren bei Raumtemperatur zu einem gelartigen Vulkanisat aus, dessen Weichheit bzw. Härte durch das Mischungsverhältnis der beiden Komponenten eingestellt werden kann. Das relativ weich eingestellte, abgebundene Gel behält seine Endkonsistenz bei und hat eine spezifische Dichte von kleiner als 1g/cm³, so daß in Verbindung mit der spezifischen Dichte des Schlauchs ein Auftrieb erzielt wird, der die Unterwasserantenne in einer bestimmten Tauchtiefe hält.

Die Gelfüllmasse der Unterwasserantenne hat den Vorteil, daß die Hydrophone im Schlauch ohne zusätzliche, mechanische Maßnahmen fixiert sind und der Durchmesser des Schlauchs recht klein gehalten werden kann, was sich auf das Gewicht und die Handhabung der Unterwasserantenne vorteilhaft auswirkt. Das Gel bewirkt aufgrund seiner niedrigen spezifischen Dichte einen Auftrieb, der weitgehend das Gewicht der Unterwasserantenne kompensiert und ein Auslegen der Unterwasserantenne in einer vorbestimmten Tauchtiefe ermöglicht. Das Gel ist umweltverträglich und tritt, im Gegensatz zu ebenfalls als Auftriebsmittel verwendeten, in den Schlauch eingefüllten Ölen, bei Beschädigung der Schleppantenne nicht unkontrolliert aus. Aufgrund der Umweltverträglichkeit des Gels läßt sich die Unterwasserantenne umweltschonend entsorgen und stellt keinen Sondermüll dar.

Die Gelfüllung der Unterwasserantenne hat allerdings den Nachteil, daß bei einer einmal gefertigte Antenne mit einer bestimmten Dichte der Füllmasse der Auftrieb der Unterwasserantenne und damit deren Tauchtiefe endgültig festgelegt ist. Reparaturen an Hydrophonen oder deren Austausch sind nicht möglich, da die Hydrophone in der Füllmasse eingebettet und ohne Zerstörung der Antenne nicht zugänglich sind.

Der Erfindung liegt die Aufgabe zugrunde, eine Unterwasserantenne mit gelartiger Füllmasse zu schaffen, die unter Beibehaltung der durch die gelartige Füllmasse erzielten Vorteile einerseits ein Reparieren oder Austauschen defekter Hydrophone ermöglicht und andererseits in ihrer Auftriebscharakteristik noch nachträglich verändert und so an geänderte oder neue Einsatzprofile angepaßt werden kann.

Die Aufgabe ist erfindungsgemäß durch die Merkmale im Anspruch 1 gelöst.

Die erfindungsgemäße Unterwasserantenne hat den Vorteil, daß durch Erwärmen der Füllmasse auf eine über deren Schmelzpunkt liegende Temperatur die Füllmasse flüssig wird und so der Schlauch problemlos entleert werden kann. Aus dem von der Füllmasse befreiten Schlauch kann dann zwecks Reparatur die Hydrophonkette herausgezogen, defekte Hydrophone ausgetauscht und die Hydrophonkette wieder in den Schlauch eingezogen werden. Anschließend wird der Schlauch wieder mit der nach Erwärmen dünnflüssigen Gelmasse gefüllt, was blasenfrei durchgeführt werden kann. Nach Abkühlen unter den Schmelzpunkt nimmt die Füllmasse wieder ihre vorteilhafte Gelkonsistenz an. Darüber hinaus kann auch jederzeit zum Zwecke der Veränderung des Auftriebs der Unterwasserantenne die Füllmasse ausgewechselt und gegen eine Füllmasse mit an den Einsatzzweck angepaßter größerer oder geringerer Dichte ersetzt werden. Infolge der Dünnflüssigkeit der auf eine Temperatur oberhalb ihres Schmelzpunktes erwärmten Füllmasse läßt sich die Neubefüllung leicht und vor allem blasenfrei durchführen.

Zweckmäßige Ausführungsformen der erfindungsgemäßen Unterwasserantenne mit vorteilhaften Weiterbildungen und Ausgestaltungen der Erfindung ergeben sich aus den weiteren Ansprüchen.

Gemäß einer bevorzugten Ausführungsform der Erfindung setzt sich die Füllmasse aus einem Gel auf Kohlenwasserstoffbasis und einem Weißöl zusammen, wobei das Mischungsverhältnis dieser Komponenten durch den gewünschte Schmelzpunkt der Füllmasse bestimmt ist. Die Temperatur des Schmelzpunktes wird so gewählt, daß sie oberhalb der Betriebstemperatur der Unterwasserantenne liegt, aber nicht so hoch ist, daß elektronische Bauteile, wie Hydrophone oder Verstärker, durch die Erwärmung der Füllmasse beschädigt werden.

Als Weißöl kommen beispielsweise die von der Firma ESSO im Markt unter der Bezeichnung PRIMOL 352, PRIMOL 362 und M 355 angebotenen Produkte in Betracht. Als Gel wird beispielsweise ein Copolymer verwendet, das z.B. von der Firma Schümann Sasol GmbH & Co KG, Hamburg unter der Bezeichnung "VARAGel 6513 oder 6514" im Markt angeboten wird.

Die Erfindung ist anhand eines in der Zeichnung dargestellten Ausführungsbeispiels im folgenden näher erläutert. Es zeigen jeweils in schematischer Darstellung:
- Fig. 1: eine Seitenansicht einer im Seebetrieb von einem Überwasserschiff geschleppten Unterwasserantenne,
- Fig. 2: ausschnittweise einen Längsschnitt einer akustischen Sektion der Unterwasserantenne.

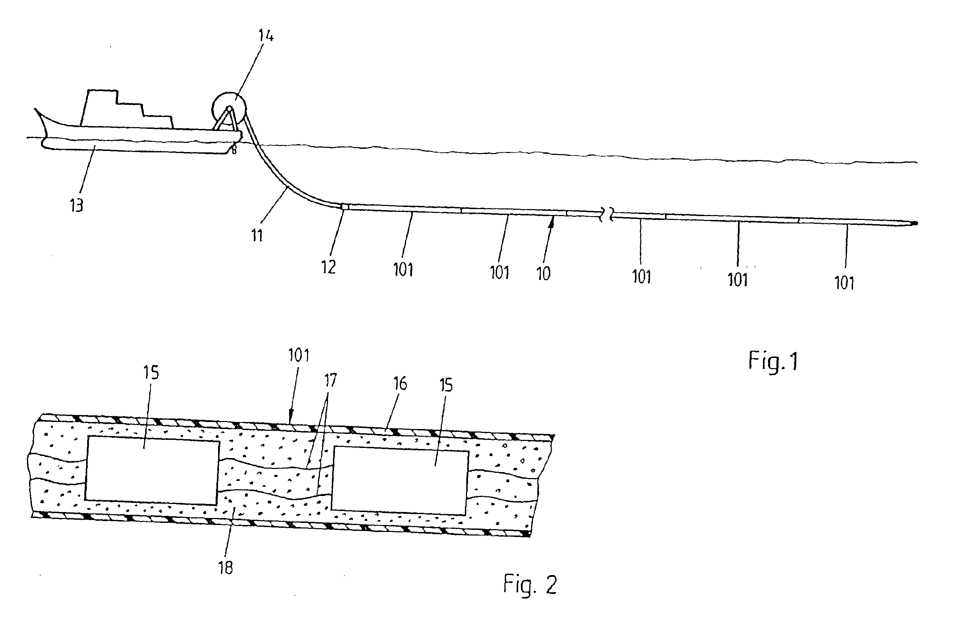

Die in Fig. 1 schematisch in Seitenansicht zu sehende Unterwasserantenne, auch als Schleppantenne bezeichnet, besteht aus einem den akustischen Teil der Unterwasserantenne bildenden Schleppstrang 10 und einem Schlepptau oder Schleppkabel 11 sowie aus einem zwischen Schleppkabel 11 und Schleppstrang 10 angeordneten sog. VIM (Vibration Isolation Modul) 12. Das VIM 12 verbindet den Schleppstrang 10 mit dem Schleppkabel 11, und das Schleppkabel 11 ist an einem Schleppfahrzeug 13 befestigt, das hier als Überwasser- oder Oberflächenschiff dargestellt ist, aber auch ein U-Boot sein kann. Das Schleppkabel 11 ist bordseitig an einer Aufwickeltrommel 14 befestigt, auf welche zum Einziehen der Schleppantenne Schleppkabel 11 und Schleppstrang 10 aufgewickelt werden. Der Schleppstrang 10 ist aus einer Mehrzahl von identisch aufgebauten akustischen Sektionen 101 zusammengesetzt.

Eine akustische Sektion 101 ist ausschnittweise im Längsschnitt in Fig. 2 dargestellt. In einem elastischen Schlauch 16 aus Polyurethan oder Polyethylen (PE) ist eine Vielzahl von hintereinander aufgereihten Hydrophonen 15 aufgenommen. Die Hydrophone 15 sind im Schlauchinnern mittig angeordnet und weisen einen gleichen Längsabstand voneinander auf. Die Hydrophone 15, denen noch Verstärker und Analog/Digital-Wandler unmittelbar zugeordnet sein können, sind durch elektrische Leitungen 17 aus Kupfer oder Lichtleitfasern zur Stromversorgung und Signalleitung miteinander verbunden. Die Hydrophone 15 sind durch eine elektrisch isolierende, gelartige Füllmasse 18, die die Hydrophone 15 unmittelbar einschließt und das Innere des Schlauchs 16 vollständig ausfüllt, fest positioniert. Die Füllmasse 18 ist in Fig. 2 durch Punktierung angedeutet. Sie weist einen niedrigen, oberhalb der Betriebstemperatur der Schleppantenne liegenden Schmelzpunkt und eine bei ihrer Herstellung einstellbare Dichte kleiner als 1 g/cm³ auf.

Die Füllmasse 18 besteht aus einem Gel auf Kohlenwasserstoffbasis und einem Weißöl, wobei das Mischungsverhältnis dieser Komponenten so gewählt ist, daß sich der gewünschte Schmelzpunkt einstellt. Bei einer Temperatur unterhalb des Schmelzpunktes hat die Füllmasse die beschriebenen gelartige Konsistenz, während sie bei einer Temperatur oberhalb des Schmelzpunktes flüssig wird und eine gut fließende Konsistenz aufweist. Der Schmelzpunkt ist dabei so festgelegt, daß er oberhalb der üblichen Betriebstemperaturen der Unterwasserantenne in deren Einsatzgebieten liegt, aber nicht ein Temperaturniveau erreicht, bei welchem eine Schädigung der elektronischen Bauteile, wie Hydrophon, Verstärker, A/D-Wandler, entstehen kann. Bevorzugt wird der Schmelzpunkt zwischen 80 °C und 90 °C gelegt. Während oder nach dem Mischprozeß wird die Gelschmelze vorteilhaft einem Vakuum ausgesetzt, so daß sie vollständig ausgast.

Durch die Verwendung von Weißölen mit unterschiedlichen spezifischen Dichten, kann die spezifische Dichte der Füllmasse beeinflußt und damit der Auftrieb der Unterwasserantenne eingestellt werden. Auch die Größe des Weißölanteils in der Füllmasse beeinflußt deren Dichte, wobei der Weißölanteil in Hinblick auf die für die gewünschte Schmelztemperatur erforderliche Konzentration des Gels nur in Grenzen variiert werden kann.

Als Gel wird ein Copolymer verwendet, beispielsweise das von der Firma Schümann Sasol GmbH & Co KG, Hamburg im Handel angebotene VARAGel 6513 oder 6514. Als Weißöl können z.B. Produkte der Firma ESSO verwendet werden, wie sie unter den Bezeichnungen PRIMOL 352, PRIMOL 362 und M 355 auf dem Markt sind.

## Patentansprüche

1. Unterwasserantenne, insbesondere Schleppantenne, mit mindestens einer akustischen Sektion (101) aus einer Vielzahl von hintereinander beabstandet aufgereihten Hydrophonen (15), die in einem elastischen Schlauch (16) aufgenommen und in einer den Schlauch (16) ausfüllenden Füllmasse (18) gelartiger Konsistenz eingebettet sind, **dadurch gekennzeichnet, daß** die Füllmasse (18) einen niedrigen, oberhalb der Betriebstemperatur der Unterwasserantenne liegenden Schmelzpunkt und eine bei ihrer Herstellung einstellbare spezifische Dichte aufweist.

2. Unterwasserantenne nach Anspruch 1, **dadurch gekennzeichnet, daß** die Füllmasse (18) aus einem Gel auf Kohlenwasserstoffbasis und einem Weißöl besteht und daß das Mischungsverhältnis dieser Komponenten durch den gewünschten Schmelzpunkt bestimmt ist.

3. Unterwasserantenne nach Anspruch 2, **dadurch gekennzeichnet, daß** die Einstellung der spezifischen Dichte der Füllmasse (18) durch Auswahl von Weißöl bestimmter spezifischer Dichte vorgenommen ist.

4. Unterwasserantenne nach Anspruch 3, **dadurch gekennzeichnet, daß** die spezifische Dichte der Füllmasse (18) durch Bemessen des Weißölanteils variierbar ist.

5. Unterwasserantenne nach einem der Ansprüche 2 - 4, **dadurch gekennzeichnet, daß** als Gel ein Copolymer verwendet wird.
